# FASCICULE DE BREVET EUROPEEN

(11) **EP 4 121 718 B1**
(45) Date de publication et mention de la délivrance du brevet: **11.02.2026**
(21) Numéro de dépôt: 21712501.2
(22) Date de dépôt: 18.03.2021
(51) Int. Cl.: G01C 21/20

(54) **PROCÉDÉ DE CALCUL D'UN CHEMIN, PRODUIT PROGRAMME D'ORDINATEUR, SUPPORT D'INFORMATIONS ET DISPOSITIF ASSOCIÉS**
VERFAHREN ZUR BERECHNUNG EINES WEGES, COMPUTERPROGRAMMPRODUKT, INFORMATIONSTRÄGER UND VORRICHTUNG DAFÜR
METHOD FOR CALCULATING A PATH, COMPUTER PROGRAM PRODUCT, INFORMATION CARRIER AND DEVICE THEREFOR

(30) Priorité: 20.03.2020 FR 2002725
(43) Date de publication de la demande: 25.01.2023
(73) Titulaire: THALES, 92400 Courbevoie (FR)
(72) Inventeur: DUQUEROIE, Bertrand, 91767 PALAISEAU CEDEX (FR); KAZMIEROWSKI, Alexandre, 91767 PALAISEAU CEDEX (FR); BONNE, Jean-Benoit, 91767 PALAISEAU CEDEX (FR)
(74) Mandataire: Lavoix
(86) Numéro de dépôt international: PCT/EP2021/056916
(87) Numéro de publication internationale: WO 2021/185952

(56) Documents cités:
- WO-A1-2015/121677
- US-A1- 2018 172 450
- US-A1- 2019 242 713
- F MARKUS JÖNSSON: "An optimal pathfinder for vehicles in real-world digital terrain maps", 1 April 1997 (1997-04-01), Stockholm, Sweden, XP055758586, Retrieved from the Internet <URL:https://markus.dimdal.se/doc/Dimdal_PathFinder.pdf> [retrieved on 20201209]

## Description

La présente invention concerne un procédé de calcul d'un chemin, ainsi qu'un produit programme d'ordinateur, un support d'informations et un dispositif associés.

Des procédés de calcul de chemins sont utilisés dans de nombreuses applications, par exemple pour calculer un chemin optimal pour un véhicule ou un piéton dans un environnement donné, depuis un point de départ jusqu'à un point d'arrivée. De tels procédés sont basés sur des algorithmes de sélection de plus court chemins, ces algorithmes étant mis en œuvre sur des graphes, c'est-à-dire des structures de données générées à partir de cartographies de l'environnement. Les cartographies de l'environnement sont divisées en un ensemble de cellules modélisant les différents emplacements composant l'environnement, les frontières entre ces cellules modélisant les liaisons entre ces emplacements, et indiquant en particulier la possibilité pour le véhicule ou le piéton de passer d'une cellule à une autre à travers la frontière entre ces cellules.

De tels procédés de calcul sont notamment bien connus pour calculer des chemins sur des réseaux de transport tels que des réseaux routiers ou des réseaux de canaux, et sont très adaptés puisque ces réseaux présentent relativement peu de liaisons entre les différentes cellules. En effet, il n'est pas prévu dans ces réseaux que le véhicule ou la personne empruntant le réseau sorte de la route ou du canal dans laquelle il se trouve, ce qui limite la complexité du calcul à effectuer puisque les véhicules ne peuvent se déplacer que selon un seul axe dans chaque portion du réseau.

Cependant, de tels procédés sont peu adaptés au calcul de chemins dans des environnements ouverts telles que des bâtiments. En effet, de telles bâtiments permettent un nombre de trajectoires beaucoup plus grand que les réseaux de transport, et requièrent donc un grand nombre de cellules pour être modélisés avec une bonne précision, chaque cellule présentant en moyenne des frontières communes avec un nombre de cellules voisines plus élevé que dans le cas des réseaux de transports. Aussi, lorsque le bâtiment est de grande dimension, le calcul du chemin le plus court est complexe et long.

Il est notamment entendu par « environnement ouverts» un environnement dans lequel le mouvement des personnes ou des véhicules n'est pas contraint par des routes ou des canaux pré-existants, mais dans lesquels ces personnes ou véhicules peuvent se déplacer librement, notamment selon au moins deux directions.

Le document *« An optimal pathfinder for vehicles in real-world digital terrain maps »* de F. M. Jönsson décrit un procédé de calcul d'un chemin, destiné à être parcouru par une entité mobile, entre un point de départ et un point d'arrivée dans un environnement.

En conséquence, les procédés de l'état de la technique ne permettent pas de calculer rapidement des chemins dans des environnements ouverts, telles que des bâtiments de grandes dimensions, lorsque ces environnements ne sont pas formés de portions dans lesquels le déplacement n'est possible que selon un axe.

Il existe donc un besoin pour un procédé de calcul d'un chemin entre deux points d'un environnement ouvert, notamment d'un bâtiment, qui permette de calculer plus rapidement un chemin court entre ces deux points que les procédés de l'état de la technique.

A cet effet, il est proposé un procédé de calcul d'un chemin entre un point de départ et un point d'arrivée dans un environnement, selon la revendication 1.

Selon des modes de réalisations avantageux mais non obligatoires, le procédé est selon l'une quelconque des revendications 2 à 10.

Il est également proposé un produit programme d'ordinateur selon la revendication 11.

Il est également proposé un support d'informations selon la revendication 12.

Il est également proposé un dispositif électronique de calcul selon la revendication 13.

Des caractéristiques et avantages de l'invention apparaîtront à la lecture de la description qui va suivre, sonnée uniquement à titre d'exemple non limitatif, et faite en référence aux dessins annexés, sur lesquels :
- la figure 1 est une représentation schématique d'un dispositif de calcul d'un chemin dans un bâtiment,
- la figure 2 est un ordinogramme des étapes d'un procédé de calcul d'un chemin, mis en œuvre par le dispositif de la figure 1, comportant des étapes de génération de cartographies du bâtiment.
- la figure 3 est une représentation d'un exemple de bâtiment de la figure 1,
- la figure 4 est une représentation d'une première cartographie du bâtiment de la figure 3, et
- la figure 5 est une deuxième cartographie du bâtiment de la figure 3.

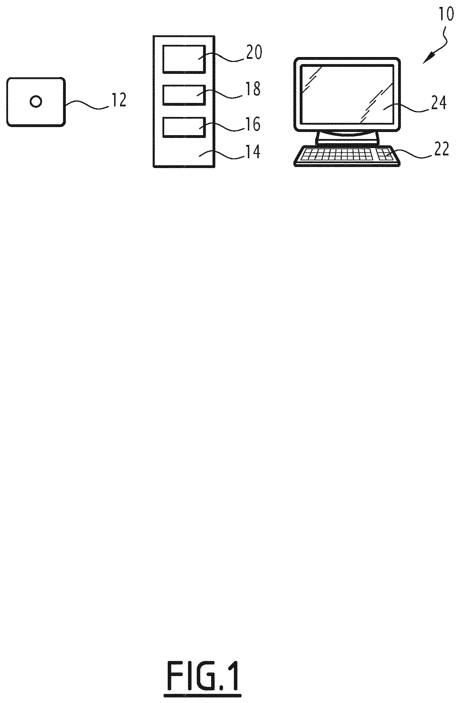

Un dispositif 10 et un produit programme d'ordinateur 12 sont représentés sur la figure 1.

L'interaction du produit programme d'ordinateur 12 avec le dispositif 10 permet de mettre en œuvre un procédé.

Le dispositif 10 est un ordinateur.

Plus généralement, le dispositif 10 est un calculateur électronique propre à manipuler et/ou transformer des données représentées comme des quantités électroniques ou physiques dans des registres du dispositif 10 et/ou des mémoires en d'autres données similaires correspondant à des données physiques dans des mémoires, des registres ou d'autres types de dispositifs d'affichage, de transmission ou de mémorisation.

Par exemple, le dispositif 10 est un calculateur d'un système de guidage de personnes ou de véhicules, par exemple un système utilisant des données de positionnement par satellite des personnes ou des véhicules.

Le dispositif 10 comporte une unité de traitement de données 14 comprenant un processeur 16, des mémoires 18 et un lecteur 20 de support d'informations. Le dispositif 10 comprend également un clavier 22 et une unité d'affichage 24.

En complément facultatif, le dispositif 10 comporte, en outre un module de communication, par exemple radiofréquence ou filaire, avec d'autres dispositifs tels que des appareils mobiles, ou encore d'autres ordinateurs connectés à un même réseau que le dispositif 10.

Le produit programme d'ordinateur 12 comporte un support lisible d'informations 20.

Un support lisible d'informations 20 est un support lisible par le dispositif 10, usuellement par l'unité de traitement d'informations 14. Le support lisible d'informations 20 est un médium adapté à mémoriser des instructions électroniques et capables d'être couplé à un bus d'un dispositif informatique.

A titre d'exemple, le support lisible d'informations 20 est un disque optique, un CD-ROM, un disque magnéto-optique, une mémoire ROM, une mémoire RAM, une mémoire EPROM, une mémoire EEPROM, une carte magnétique ou une carte optique.

Sur le support lisible d'informations 20 est mémorisé le programme comprenant des instructions de programme.

Le programme d'ordinateur est chargeable sur l'unité de traitement de données 14 et est adapté pour entraîner la mise en œuvre d'un procédé d'explication d'un score associé à un vecteur par une fonction lorsque le programme d'ordinateur est mis en œuvre sur le processeur 16.

En variante, le dispositif 10 comporte, en lieu et place du processeur 16 et du produit programme d'ordinateur (12), un ou plusieurs circuits intégrés dédiés, ou encore un ensemble de composants logiques programmables, présentant les mêmes fonctions que l'interaction du dispositif 10 avec le produit programme d'ordinateur 12,

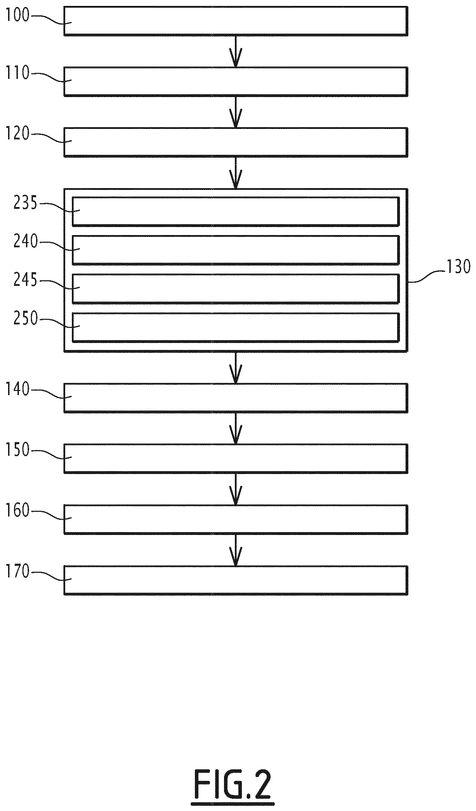

Le fonctionnement du dispositif 10 en interaction avec le produit programme d'ordinateur 12 est maintenant décrit en référence à la figure 2 qui illustre un exemple de mise en œuvre d'un procédé de calcul d'un chemin entre un point de départ D et un point d'arrivée d'un environnement.

Dans l'exemple représenté sur les figures, l'environnement est une portion du sol d'un étage E d'un bâtiment comportant un ensemble de colonnes 30, au moins un escalier mécanique 35 et au moins un puits 40 reliant l'étage E à un étage inférieur du bâtiment.

L'étage E est prévu pour permettre un déplacement d'au moins une entité T dans l'étage E, notamment d'un ensemble d'entités T.

Le bâtiment est, par exemple, un stade ou un centre commercial.

Il est à noter que, en variante, l'environnement n'est pas un étage mais un ensemble d'étages d'un bâtiment, ou encore une portion d'un espace extérieur tel qu'un désert.

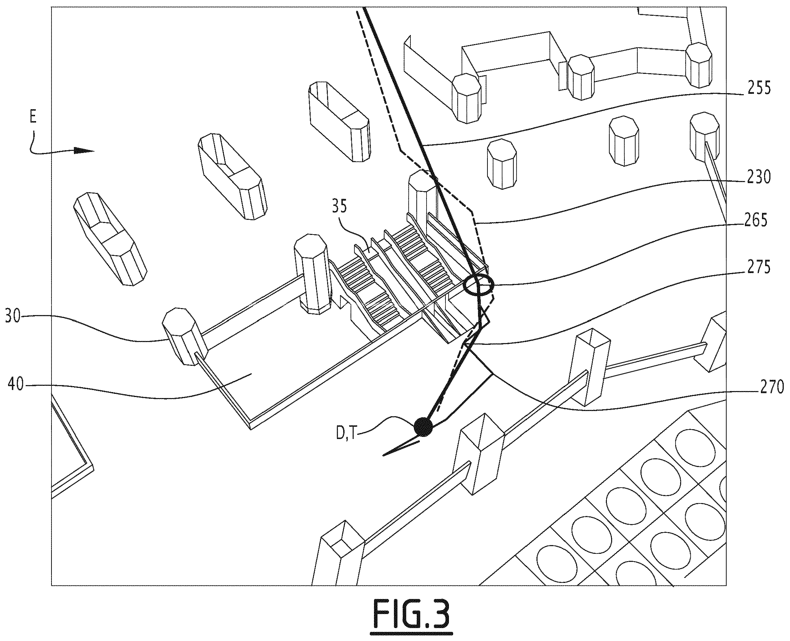

Une représentation d'un exemple d'étage E est visible sur la figure 3.

Le point de départ D est, par exemple, un siège attribué à la personne T, ou encore une place de parking.

Le point d'arrivée est, par exemple, une sortie, notamment une sortie de secours, de l'étage E.

Il est à noter que tous types de points de départ et d'arrivée sont susceptibles d'être envisagés.

Le point d'arrivée n'est pas visible sur les figures, afin de mieux mettre en valeur les différences entre les différents chemins calculés par le procédé, qui seraient peu distinguables si le point d'arrivée et le point de départ D étaient suffisamment proches pour être représentés aisément sur la même figure.

Chaque entité T est, par exemple, une personne ou un groupe de personnes. En variante, au moins une entité T est un robot autonome ou piloté à distance tel qu'un drone, ou encore un véhicule.

Chaque personne T est mobile par rapport à l'étage E. En particulier, chaque personne T est apte à se déplacer entre le point de départ D et le point d'arrivée.

Le procédé comporte une première étape 100 de génération, une deuxième étape 110 de génération, une première étape 120 de détermination, une première étape 130 de calcul, une deuxième étape 140 de détermination, une deuxième étape 150 de génération, une deuxième étape 160 de calcul et une étape 170 de déplacement.

Au cours de la première étape de génération 100, une première cartographie 200 est, de manière connue en soi, générée dans une mémoire 18 par le processeur 16.

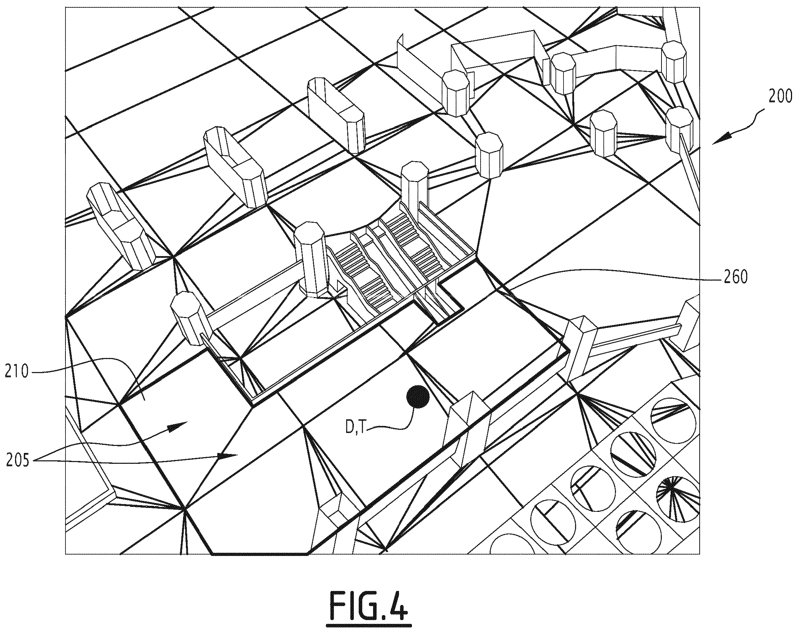

La première cartographie 200 est représentée partiellement sur les figures 3 et 4.

Il est entendu par « cartographie », une représentation de l'étage E dans une mémoire 18 du dispositif 10.

La première cartographie 200 est, par exemple, générée à partir d'images de l'étage E acquises par un ou plusieurs dispositifs d'imagerie tels que des caméras, ou encore par un ou plusieurs radars, lidars ou sonars, ou encore à partir de plans.

La première cartographie 200 est, par exemple, configurée pour permettre au programme d'ordinateur 12 de générer, sur l'unité d'affichage 24, une représentation de l'étage E.

La première cartographie 200 est, par exemple, une cartographie bidimensionnelle, ou encore une cartographie dite « 2.5D » composée d'un ensemble de cartographies bidimensionnelles reliées les unes aux autres.

La première cartographie 200 est divisée, de manière connue en soi, en un ensemble de premières zones 205. De telles zones sont également appelées « premières cellules ».

Par exemple, la première cartographie 200 est divisée en un ensemble de cases 210, chaque case 210 comportant une première zone 205 ou une pluralité de premières zones 205.

Chaque première zone 205 délimite une portion de l'étage E, cette portion étant susceptible d'accueillir une personne T, notamment d'être parcourue par la personne T. Ainsi, la première cartographie 200 est formée par l'ensemble des zones de l'étage E qui sont susceptibles de permettre le passage d'une personne T.

Par exemple, la première cartographie 200 est une cartographie de l'espace libre du sol de l'étage du bâtiment représenté sur la figure 3, à l'exclusion notamment des colonnes 30 et du puits 40.

Chaque première zone 205 est incluse dans une unique case 210 correspondante. En d'autres termes, aucune première zone 205 n'est incluse partiellement dans deux cases 210.

En particulier, au moins une case 210 est subdivisée en une pluralité de premières zones 205. Dans ce cas, l'ensemble des premières zones 205 de la case 210 est exactement superposable à la case 210, aucune portion de la case 210 n'étant en-dehors de chacune des premières zones 205 et aucune portion d'une première zone 205 n'étant en-dehors de la case 210.

Sur la figure 4, une case divisée en deux premières zones 205 est notamment indiquée par la référence 210, mais il apparaîtra à l'homme du métier que le nombre de et la forme des premières zones 205 sont susceptibles de varier d'une case 210 à l'autre en fonction des besoins de la cartographie, afin d'assurer une bonne précision de la cartographie.

Les cases 210 et les premières zones 205 ne sont pas représentées sur la figure 3, pour plus de clarté.

Chaque première zone 205 est, par exemple, polygonale. En particulier, chaque première zone 205 est polygonale et convexe.

Il est entendu par « convexe » que tout segment reliant deux points d'un polygone est inclus dans le polygone considéré.

Les cartographies contenant des zones polygonales sont connues en soi, et fréquemment dénommées « maillage de navigation » ou « mesh de navigation » (de l'Anglais « Navigational mesh »). Les premières zones polygonales sont parfois nommées « polygones de navigation » ou « polynavs ».

Chaque première zone 205 est délimitée par une face ou par un ensemble de faces, chaque face étant notamment un segment de droite si la première zone 205 est polygonale. Lorsque la première zone 205 est polygonale, une face est alors appelée parfois « côté » de cette première zone 205.

Il est donc à noter que le terme « face » ne s'applique pas seulement à des faces bidimensionnelles de premières zones 205 tridimensionnelles, mais également à des segments de droites voire à des courbes lorsque les premières zones 205 sont bidimensionnelles.

Dans de nombreux cas, les faces des zones sont appelées « portails », et ces deux termes sont généralement considérés comme interchangeables. Dans la suite de cette description, le terme « portail » est utilisé.

De manière connue en soi, les portails sont soit passants soit non-passants. En particulier, chaque portail est associé dans la mémoire 18 à une caractéristique « passante » ou « non-passante ».

Un portail passant est un portail entre deux premières zones 205 voisines correspondant à des zones de l'étage E entre lesquelles une personne T est susceptible de se déplacer en traversant le portail considéré. De manière connue en soi, certains portails passants sont passants dans les deux sens, ou sont unidirectionnels, par exemple si ils s'étendent le long de barrières ou de portes unidirectionnelles, et identifiés par une caractéristique correspondante dans la mémoire 18.

Un portail non-passant est un portail qui ne délimite qu'une unique première zone 205. Par exemple, le portail considéré est interposé entre la zone 205 considérée et un périmètre de l'étage E, par exemple une zone non-accessible du sol, le puits 40, ou une colonne 30.

Il est en outre à noter que chaque première zone 205 et/ou chaque portail est susceptible d'être associé dans la mémoire à un ensemble de caractéristiques telles que l'accessibilité de la première zone 205 considérée (par exemple si la première zone 205 correspond à une zone franchissable seulement dans certaines conditions, ou interdite ou impraticable à certains types d'entités), des contraintes au franchissement de certains portails (par exemple les portails délimitant une première zone 205 correspondant à un escalier sont associés à une caractéristique « infranchissable par un fauteuil roulant mais franchissable par une personne valide »), ou encore des sens de circulation autorisés.

L'association de ces caractéristiques aux premières zones ou aux portails est connue en soi et n'est pas décrite plus en détails.

Les cases 210 sont, par exemple, formées par l'intersection d'une grille et de l'étage E. En particulier, la grille est superposée à l'étage E, chaque zone de l'étage E délimitée par la grille formant une case 210.

La grille est, par exemple, une grille à maille carrée.

Sur la figure 4, la case indiquée par la référence 210 est en forme de carré, dont a été soustraite la portion du puits 40 qui est incluse dans le carré.

Il est à noter que la forme de la grille et donc des cases 210 est susceptible de varier.

La division d'une cartographie en cases 210 régulières elles-mêmes subdivisées en polygones est appelée parfois « approche tilée », de l'Anglais « Tile » signifiant « case », et permet de simplifier la gestion de la cartographie, notamment si la cartographie est modifiée, puisque seules les zones incluses dans certaines cases doivent alors être modifiées.

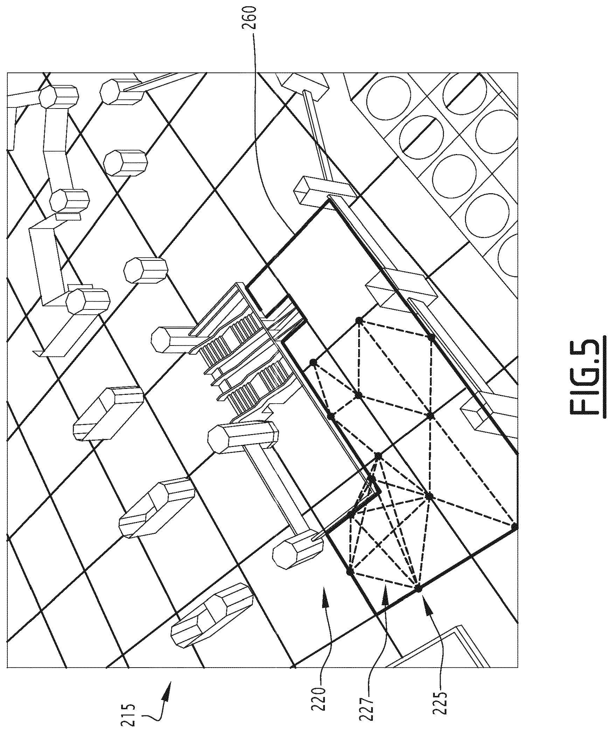

Lors de la deuxième étape de génération 110, une deuxième cartographie 215 est générée dans la mémoire 18. Un exemple de deuxième cartographie 215 est représenté sur la figure 5.

La deuxième cartographie 215 est une cartographie de l'étage E. En particulier, la deuxième cartographie 215 inclut le point de départ D et le point d'arrivée.

La deuxième cartographie 215 comporte un ensemble de deuxièmes zones 220 (également appelées « deuxièmes cellules »). Un nombre total de deuxièmes zones 220 de la deuxième cartographie 215 est strictement inférieur à un nombre total de premières zones 205 de la première cartographie 200.

Une valeur moyenne de surface des deuxièmes zones 220 est strictement supérieure à une valeur moyenne de surface des premières zones 205.

Chaque deuxième zone 220 délimite une portion de la région 260, cette portion étant susceptible d'être traversée par la personne T.

Au moins une deuxième zone 220, est, par exemple, formée par la fusion d'au moins deux premières zones 205.

Selon un mode de mise en œuvre du procédé, au moins une deuxième zone 220, par exemple chaque deuxième zone 220, est formée par la fusion de chaque première zone 205 incluse dans une même case 210 de la première cartographie 200.

Ainsi, chaque deuxième zone 220 formée par une case 210 (si la case 210 ne contenait qu'une unique première zone 205) ou par la fusion de chaque première zone 205 incluse case 210, est exactement superposable à la case 210 correspondante.

En variante ou en complément, au moins une case 210 est divisée en deux deuxièmes zones 220 ou plus. Par exemple, chaque deuxième zone 220 est obtenue par fusion de chaque première zone 205 présentant des caractéristiques identiques et incluse dans une même case 210. En particulier, seules des premières zones 205 contigües sont fusionnées, de manière à ce que chaque deuxième zone 220 soit d'un seul tenant.

Dans ce cas, si deux types de premières zones 205 présentant des caractéristiques différentes (par exemple certaines premières zones 205 ne sont associées à aucune caractéristique, et sont notamment des zones vides n'imposant aucune contrainte au passage des personnes T, tandis que d'autres premières zones de la même case 210 sont associées à une caractéristique indiquant qu'elles ne peuvent être traversées que dans une direction, par exemple des zones d'un escalier mécanique), deux deuxièmes zones 220 ou plus composent une même case 210.

Chaque deuxième zone 220 comporte, de manière similaire aux premières zones 205, au moins un portail, notamment une pluralité de portails, délimitant la deuxième zone 220. En particulier, des deuxièmes zones 220 contigües sont délimitées par au moins un portail commun aux deux deuxièmes zones 220 contigües.

Lors de la première étape 120 de détermination, le processeur 16 génère dans la mémoire 18 un premier graphe des deuxièmes zones 220.

Il est entendu par « graphe » une structure de données formée de nœuds reliés deux à deux par des arêtes. De tels graphes sont fréquemment utilisés pour représenter des environnements, par exemple des réseaux de transport.

Les graphes utilisés pour représenter des environnements sont en général tels que chaque nœud correspond à un point de l'environnement, et chaque arête entre deux nœuds est associée à une distance entre les deux points correspondants.

Le graphe est ainsi susceptible d'être représenté graphiquement par un ensemble de lignes reliant entre eux les points de l'environnement correspondant aux nœuds, cette représentation étant parfois superposée à une représentation graphique de l'environnement.

Dans la suite de cette description, le terme « chemin » est utilisé pour décrire un chemin entre deux points de l'étage E. Le terme « parcours » est, lui, utilisé pour décrire un parcours reliant deux nœuds d'un graphe.

Un parcours entre deux nœuds d'un graphe suit une succession d'arêtes pour relier les deux nœuds correspondants en passant par un ou plusieurs autres nœuds. Des algorithmes permettent, par une exploration du graphe, de déterminer le parcours le plus court entre deux nœuds du graphe, c'est-à-dire le parcours pour lequel la somme des distances associées aux arêtes parcourues par le parcours est la plus faible.

Ainsi, le parcours le plus court entre deux nœuds du graphe est une estimation du chemin le plus court entre les deux points correspondant aux deux nœuds considérés.

Le premier graphe est un graphe des liaisons entre les différentes deuxièmes zones 220.

En d'autres termes, le premier graphe contient au moins un nœud pour chaque deuxième zone 220, et au moins une arête pour chaque paire de deux deuxièmes zones 220 contigües et permettant le passage d'une personne T directement de l'une à l'autre des deux deuxièmes zones 220 considérées. Un tel graphe modélise ainsi les deuxièmes zones 220 et leurs liaisons, en ce sens que chaque arête correspond à un mouvement possible de la personne T entre les deux zones 220 correspondant aux nœuds reliés par l'arête.

Chaque nœud correspond à un point d'une deuxième zone 220, par exemple au milieu d'un portail délimitant la deuxième zone 220.

Par exemple, le premier graphe est un graphe ayant un nœud pour chaque portail de l'ensemble de deuxièmes zones 220, chaque arête reliant deux nœuds appartenant à une même deuxième zone 220.

De préférence, le premier graphe comporte un nœud pour chaque portail de la deuxième cartographie 215.

Chaque arête est associée dans la mémoire 18 à une distance entre points correspondant aux nœuds reliés par l'arête considérée.

Le premier graphe est partiellement représenté graphiquement sur la figure 5, les nœuds correspondant à quatre des deuxièmes zones 220 (c'est-à-dire correspondant chacun au milieu d'un portail délimitant une deuxième zone 220) sont représentés par des points noirs 225 et les arêtes du premier graphe étant représentées chacun par une ligne pointillée 227 reliant deux nœuds. Seuls les nœuds correspondant à quatre deuxièmes zones 220 sont représentés, pour ne pas surcharger la figure 5.

En variante, le premier graphe comporte un nœud pour chaque deuxième zone 220, les nœuds correspondant à deux deuxièmes zones 220 dont un portail commun est passant étant reliés l'un à l'autre par une arête correspondante. Dans ce cas, chaque nœud est par exemple associé au centre de la deuxième zone 220 correspondante.

Selon une variante, les nœuds correspondant aux portails non-passants ne sont pas générés.

En complément facultatif, le premier graphe comporte, en outre, au moins un nœud correspondant à une intersection entre deux portails d'une deuxième zone 220, c'est-à-dire à un sommet de la deuxième zone. Par exemple, le premier graphe comporte au moins un nœud pour chaque portail de chaque deuxième zone 220 et un nœud pour chaque sommet de chaque deuxième zone 220.

Lorsqu'un portail est commun à deux deuxièmes zones 220, un seul nœud correspondant est par exemple généré. De même, lorsqu'un sommet est commun à plusieurs deuxièmes zones 220, un unique nœud correspondant est généré.

En outre, en complément facultatif, une pluralité de nœuds est générée pour au moins un portail. Par exemple, le portail comporte une première portion située à un premier niveau du sol et une deuxième portion située à un deuxième niveau du sol, un nœud correspondant au milieu de la première portion et un nœud correspondant au milieu de la deuxième portion étant alors générés.

Lors de la première étape de calcul 130, au moins un chemin provisoire 230 entre le point de départ D et le point d'arrivée est calculé par le processeur 16.

Le chemin provisoire 230 est un chemin reliant la deuxième zone 220 contenant le point de départ D à la deuxième zone 220 contenant le point d'arrivée.

Par exemple, le calcul du chemin provisoire 230 comprend l'application d'un algorithme de Dijkstra sur le premier graphe. En variante, le calcul du chemin provisoire 230 comprend l'application d'un algorithme A* sur le premier graphe.

L'algorithme de Dijkstra est un algorithme calculant les plus courts parcours entre deux nœuds d'un graphe, ou entre un nœud de départ et chaque nœud du graphe.

L'algorithme A* (prononcé « A étoile », ou « A star ») est un autre algorithme de calcul de plus court parcours entre deux points d'un graphe.

La première étape de calcul 130 comporte, par exemple, une étape 235 de détermination d'un ensemble de chemins prospectifs, une étape 240 de calcul d'un ensemble de sommes, une étape 245 de comparaison et une étape 250 de sélection du chemin provisoire.

Au cours de l'étape de détermination d'un ensemble de chemins prospectifs 235, le processeur 16 détermine une pluralité de chemins prospectifs. Chaque chemin prospectif est un chemin reliant un portail (notamment le milieu de chaque portail) de la deuxième zone 220 contenant le point de départ D à un portail de la deuxième zone 220 contenant le point d'arrivée.

Par exemple, chaque chemin prospectif possible est calculé par le processeur 16. En d'autres termes, pour chaque portail de la deuxième zone 220 contenant le point de départ D, il est calculé autant de chemins prospectifs que la deuxième zone 220 contenant le point d'arrivée comporte de portails.

Chaque chemin prospectif est, notamment, le chemin le plus court reliant les deux portails considérés, calculé par un algorithme de calcul de plus court chemin.

Chaque chemin prospectif est, par exemple, calculé par le processeur 16 en appliquant un algorithme de Dijkstra ou A* sur le premier graphe.

Par exemple, pour chaque portail de la deuxième zone 220 contenant le point de départ D, il est calculé, pour chaque portail de la deuxième cartographie 215, le plus court chemin reliant les deux portails considérés.

Chaque plus court chemin calculé est mémorisé dans la mémoire 18. En particulier, le parcours associé au chemin calculé, c'est-à-dire la succession de nœuds et d'arêtes formant le parcours, est mémorisé dans la mémoire 18.

Parmi les plus court chemins calculés, les plus courts chemins reliant un portail de la deuxième zone 220 contenant le point de départ D à un portail de la deuxième zone 220 contenant le point d'arrivée sont identifiés dans la mémoire 18 comme étant des chemins prospectifs.

Le nombre de chemins prospectifs déterminés par le processeur 16 est donc égal au produit du nombre de portails de la deuxième zone 220 contenant le point de départ D et du nombre de portails de la deuxième zone 220 contenant le point d'arrivée.

Le chemin provisoire 230 est ensuite sélectionné par le processeur 16 parmi les différents chemins prospectifs mémorisés.

Pour chaque chemin prospectif mémorisé, il est calculé une somme au cours de l'étape 240.

Chaque somme est une somme d'une longueur du chemin prospectif, d'une distance de départ et d'une distance d'arrivée.

La longueur est égale à la somme des distances associées aux arêtes du chemin prospectif.

La distance de départ est la distance reliant le point de départ D au portail de la deuxième zone 220 contenant le point de départ D correspondant au chemin prospectif considéré.

La distance d'arrivée est la distance reliant le point d'arrivée au portail de la deuxième zone 220 contenant le point d'arrivée correspondant au chemin prospectif considéré.

Lors de l'étape 245, les sommes calculées sont comparées par le processeur 16.

Lors de l'étape 250, le chemin prospectif correspondant à la somme la plus faible est sélectionné comme étant le chemin provisoire.

Optionnellement, la première étape de calcul 130 comporte, en outre, une étape de lissage du chemin provisoire 230.

Par construction, le chemin provisoire 230, tel que calculé à l'issue des étapes 235 à 250, est un chemin suivant une succession de segments de droite reliant des points de l'étage E associés à des nœuds du premier graphe, puisque le chemin provisoire est déterminé par un algorithme de plus court chemin appliqué sur ce premier graphe.

Aussi, le chemin provisoire 230, à l'issue des étapes 235 à 250, présente un grand nombre d'angles et, de manière générale, n'est pas optimisé, notamment parce que le chemin provisoire 230 est formé par un ensemble des segments de droite précités, ces segments découlant de la forme des deuxièmes zones 220 et ne dépendant pas de la position des points d'arrivée et de départ D.

Lors de l'étape de lissage du chemin provisoire, le chemin provisoire 230 est lissé le processeur 16, par exemple par un algorithme de lissage tel qu'un algorithme « funnelling ». Il en résulte un chemin provisoire lissé, comme représenté sur la figure 3 et indiqué avec la référence 255.

Ainsi, à l'issue de la première étape de calcul 130, il est mémorisé dans la mémoire 18 un chemin provisoire 230, 255, lissé ou non, reliant un portail de la deuxième zone 220 contenant le point de départ D à un portail de la deuxième zone 220 contenant le point d'arrivée.

Dans la mesure où le chemin provisoire 230, 255 a été déterminé à partir de la deuxième cartographie 215, dans laquelle les deuxièmes zones 220 sont de grande taille (notamment lorsqu'elles sont obtenues par la fusion de premières zones 205), le chemin provisoire 230, 255 n'est pas très précis, et est susceptible de traverser des obstacles. Dans l'exemple représenté sur la figure 3, le chemin provisoire 230 et le chemin provisoire lissé 255 traversent chacun le puits 40 ouvert sur l'étage inférieur du bâtiment. Le chemin provisoire 230, 255 ne peut donc pas être utilisé par la personne T lors de son déplacement.

Toutefois, le chemin provisoire 230, 255 sera utilisé pour déterminer le chemin effectif suivi par la personne T par l'itération de la deuxième étape 140 de détermination, la deuxième étape 150 de génération, la deuxième étape 160 de calcul et de l'étape 170 de déplacement pour différentes positions estimées de la personne T au cours de son déplacement.

Lors de la deuxième étape de détermination 140, une position de la personne T est estimée et une région 260 de la première cartographie 200, entourant la position estimée de la personne T, est déterminée par le processeur 16.

La position estimée de la personne T est, lors de la première itération de la deuxième étape 140 de détermination, la deuxième étape 150 de génération, la deuxième étape 160 de calcul et de l'étape 170 de déplacement, le point de départ D.

Sur les figures 3 à 5, la personne T se trouve au point de départ D.

Lors de chaque autre itération, la position estimée est, par exemple, une position de la personne T estimée par des capteurs de l'étage E, ou encore par un dispositif de positionnement par satellite. Les capteurs sont, par exemple, des capteurs d'image, des éléments de détection de signaux radio, ou encore des radars, des sonars ou des lidars. Dans un tel mode de mise en œuvre, le procédé est par exemple mis en œuvre au cours d'un déplacement de la personne T, le dispositif 10 étant configuré pour envoyer un ensemble de messages successifs à la personne T, chaque message étant envoyé à l'issue d'une itération. Une portion du chemin que la personne T doit emprunter entre le point de départ D et le point d'arrivée est calculée lors de chaque itération, chaque message étant configuré pour indiquer la portion calculée à la personne T.

En variante, la position estimée est une position fictive de la personne T. Dans ce cas, comme il apparaîtra plus bas, les différentes itérations sont mises en œuvre successivement pour calculer dans sa totalité le chemin que la personne T doit emprunter entre le point de départ D et le point d'arrivée, un unique message configuré pour indiquer le chemin dans sa totalité à la personne T étant envoyé par le dispositif 10.

La région 260 comprend une pluralité de premières zones 205. Par exemple, la région 260 comprend au moins la case 210 dans laquelle la position estimée de la personne T est incluse. Selon un mode de réalisation, la région 260 comprend, notamment est formée par, la case 210 dans laquelle la position estimée de la personne T est incluse et chaque case 210 en contact avec la case 210 dans laquelle la position estimée de la personne T est incluse.

Il est entendu par « case en contact avec » une case considérée toute case 210 dont le périmètre partage au moins un point avec le périmètre de la case 210 considérée. Ainsi, lorsque les cases 210 sont délimitées par une grille carrée, la région 260 comporte au maximum 9 cases 210.

Dans l'exemple représenté sur les figures 4 et 5, la région 260 comprend 6 cases 210 puisque la case 210 contenant le point de départ D et deux de ses cases voisines sont délimités d'un côté par un périmètre (correspondant à une extrémité de l'étage considéré du bâtiment) de la première cartographie 200 et non par des cases 210.

Il est défini un point d'intersection 265 entre le chemin provisoire 230, 255 et le périmètre de la région 260. Le point d'intersection 265 est notamment le point d'intersection entre le chemin provisoire lissé 255, si le chemin provisoire 230 a été lissé, et le périmètre de la région 260.

Le point d'intersection 265 est un point du chemin provisoire 230, 255 correspondant qui n'a pas encore été parcouru par la personne T. En particulier, le point d'intersection 265 est interposé le long du chemin provisoire 230, 255 entre la position estimée de la personne T et le point d'arrivée. Un point en lequel le chemin provisoire 230, 255 coupe le périmètre de la région 260 mais qui n'est pas interposé entre la position estimée de la personne T et le point d'arrivée n'est pas un point d'intersection 265.

Si le point d'arrivée est contenu dans la région 260 et le chemin provisoire 230, 255 n'implique pas de sortir de la région 260 pour atteindre le point d'arrivée (en d'autres termes, si aucun point d'intersection entre le chemin provisoire 230, 255 et le périmètre de la région 260 n'existe), le point d'intersection 265 est le point d'arrivée.

Lors de la deuxième étape de génération 150, un deuxième graphe est généré.

Le deuxième graphe est un graphe des liaisons entre les premières zones 205 contenues dans la région 260.

En d'autres termes, le deuxième graphe contient au moins un nœud pour chaque première zone 205 contenue dans la région 260, et au moins une arête pour chaque paire de deux premières zones 205 contigües et permettant le passage d'une personne T directement de l'une à l'autre des deux premières zones 205 considérées.

Chaque nœud correspond à un point d'une première zone 205.

Par exemple, le deuxième graphe est un graphe ayant un nœud pour chaque portail de l'ensemble des premières zones 205, chaque arête reliant deux nœuds appartenant à une même première zone 205 de la région 260.

En particulier, chaque nœud correspond au milieu d'un portail d'une première zone 205.

De préférence, le deuxième graphe comporte un nœud pour chaque portail contenu dans la région 260 de la première cartographie 260.

Chaque arête est associée dans la mémoire 18 à une distance entre points correspondant aux nœuds reliés par l'arête considérée.

En variante, le deuxième graphe comporte un nœud pour chaque première zone 205, les nœuds correspondant à deux premières zones 205 dont un portail commun est passante étant reliés l'un à l'autre par une arête correspondante.

Lors de la deuxième étape de calcul 160, un chemin partiel 270 est calculé.

Le chemin partiel 270 est un chemin reliant la position estimée au point d'intersection 265.

Le chemin partiel 270 est calculé en mettant en œuvre un algorithme de plus court chemin sur le deuxième graphe. En particulier, le chemin partiel 270 n'est calculé qu'en fonction de la région 260 et des premières zones 205 contenues dans la région 260. Aucune première zone 205 située hors de la région 260 n'est prise en compte.

Le chemin partiel 270 est, par exemple, calculé en mettant en œuvre un algorithme de Dijkstra ou de A* sur le deuxième graphe.

Optionnellement, le chemin partiel 270 calculé est lissé par le processeur 16 pour obtenir un chemin partiel lissé 275.

Il est à noter que, bien que le chemin provisoire 230, 255 soit susceptible de traverser des éléments infranchissables de l'étage E, le chemin partiel 270, qui est calculé à partir de la première cartographie 200, plus détaillée que la deuxième cartographie 215, ne traverse pas de tels éléments infranchissables.

Lors de l'étape de déplacement 170, la position estimée de la personne T est déplacée le long du chemin partiel 270 ou 275 jusqu'à une nouvelle position estimée. Par exemple, la position estimée est déplacée jusqu'à ce que la position estimée quitte la case 210 dans laquelle elle était incluse et atteigne une autre case 210.

Par exemple, la personne T se déplace le long du chemin partiel 270, la position estimée de la personne T étant évaluée par un ou plusieurs capteurs de position.

L'étape de déplacement 170 comporte, par exemple, l'émission d'un message propre à entraîner le déplacement de la personne T le long du chemin partiel 270 ou 275 à suivre, par le dispositif 10, à destination de la personne T, par exemple à destination d'un appareil mobile de l'entité T. Le message est notamment émis avant que la personne T ne se déplace.

Les étapes 140 à 170 sont réitérées pour chaque position estimée jusqu'à ce que la personne T atteigne le point d'arrivée. Par exemple, à chaque fois que la position estimée atteint une nouvelle case 210, une nouvelle itération des étapes 140 à 170 est mise en œuvre.

Ainsi, le chemin entre le point de départ D et le point d'arrivée est calculé, morceau par morceau, par le dispositif 10.

Le chemin entre le point de départ D et le point d'arrivée est formé par l'ensemble des positions estimées de la personne T au cours des différentes itérations des étapes 140 à 170. Un unique message propre à entraîner le déplacement de la personne T le long du chemin calculé est par exemple émis par le dispositif 10 à destination de la personne T à l'issue de la mise en œuvre du procédé.

Il est à noter que le procédé peut également trouver des applications autres que la génération de messages de guidage de la personne T dans l'étage E, ces applications incluant notamment l'évaluation des déplacements d'un grand nombre d'entités, par exemple d'une foule, notamment dans le cadre de la conception d'un bâtiment ou d'une installation destinée à accueillir la ou les personnes T, ou encore la génération de chemins pour des avatars virtuels dans des jeux vidéo.

Lorsque plusieurs personnes sont présentes simultanément dans l'étage E, l'étape de déplacement 170 est susceptible d'inclure un déplacement de la position estimée de la personne T déviant du chemin partiel généré, notamment si une telle déviation est nécessaire pour éviter une collision avec une autre personne T.

En outre, il est à noter que, lorsque chaque plus court chemin calculé pendant l'étape 130 est mémorisé, le procédé est susceptible d'être mis en œuvre ultérieurement pour un point de départ D situé dans la même deuxième zone 220 que le point de départ D pour lequel les plus courts chemins ont été mémorisés sans devoir mettre en œuvre à nouveau les étapes 100 à 120. Lors de la mise en œuvre ultérieure, les chemins prospectifs, et notamment le chemin provisoire, sont sélectionnés parmi les chemins mémorisés antérieurement.

Le procédé permet de calculer le chemin entre le point de départ D et le point d'arrivée sans qu'un algorithme de recherche de plus court chemin soit mis en œuvre sur un graphe correspondant à la totalité de la première cartographie 200, qui est la plus détaillée des cartographies 200 et 215. Ces algorithmes sont seulement mis en œuvre pour le premier graphe (généré à partir d'une cartographie 215 contenant moins de zones que la première cartographie) et le deuxième graphe (généré à partir d'une partie de la première cartographie 215), ces graphes étant donc peu complexes par rapport à un graphe qui correspondrait à l'intégralité de la première cartographie 200.

Ainsi, le temps de calcul requis par le procédé est nettement réduit par rapport aux procédés de calcul de chemin de l'état de la technique. Le procédé de calcul d'un chemin est donc particulièrement adapté au calcul de chemins dans un environnement ouvert tel qu'un étage E d'un bâtiment, ainsi qu'à des situations où des chemins doivent être calculés simultanément pour de nombreuses personnes T.

Le choix de polygones convexes pour la première ou la deuxième zone permet de simplifier la structure des chemins calculés ainsi que de simplifier le lissage éventuel de ces chemins.

Lorsque les premières zones 205 sont incluses dans des cases 210 dont elles forment des subdivisions, il est particulièrement aisé de déterminer les deuxièmes zones 220 de manière simple et rapide en fusionnant chaque première zone 205 d'une même case 210 en une unique deuxième zone 220 correspondant à la case 210. Lorsque chaque deuxième zone 220 est obtenue de cette manière, la génération de la deuxième cartographie 215 est simplifiée. En outre, du fait de la taille importante des cases 210, le premier graphe est alors relativement peu complexe et le calcul du chemin provisoire 230, 255 est alors particulièrement rapide.

Dans la mesure où la taille des zones 205 et 220 est susceptible d'être importante, le chemin calculé est plus précis lorsque les graphes comportent un nœud pour chaque portail des cartographies 200, 215 correspondantes que par exemple s'ils comportaient un nœud pour chaque zone 205, 220.

Le calcul de tous les chemins prospectifs et la sélection du chemin provisoire parmi les chemins prospectifs est une méthode peu gourmande en temps de calcul de détermination du chemin provisoire.

Comparer la somme des longueurs des chemins prospectifs et des distances entre les portails et les points de départ et d'origine permet de sélectionner le chemin provisoire de manière précise et simple, même si les deuxièmes zones 220 sont de grandes dimensions.

Calculer et mémoriser le plus court chemin entre chaque nœud associé à la deuxième zone 220 contenant le point de départ D et chaque autre nœud du premier graphe permet de réutiliser le résultat de ces calculs pour chaque mise en œuvre ultérieure du procédé pour un point de départ inclus dans la même deuxième zone 220 et ainsi de ne pas devoir calculer à nouveau les chemins prospectifs.

Il est à noter qu'en variante, lors de l'étape 130, le plus court chemin entre chaque nœud associé à la deuxième zone 220 contenant le point d'arrivée et chaque autre nœud du premier graphe est calculé, en remplacement ou en complément du calcul des chemins entre chaque nœud associé à la deuxième zone 220 contenant le point de départ D et chaque autre nœud du premier graphe. Cela permet alors de plus aisément adapter le chemin en cas de déviation importante de la personne T par rapport au chemin partiel 270 calculé, notamment en cas de mouvement de foule.

Le lissage du chemin provisoire 230 ou partiel 270 permet d'obtenir un chemin provisoire 255 ou partiel 275 lissé plus court et plus direct que le chemin non-lissé.

Lorsque le premier graphe comporte des nœuds associés aux sommets en plus des nœuds associés aux portails des deuxièmes zones 220, le chemin provisoire 230 généré est plus direct et plus court que si les nœuds sont uniquement présents au niveau des portails des deuxièmes cellules 220.

## Revendications

1. Procédé de calcul d'un chemin entre un point de départ (D) et un point d'arrivée dans un environnement (E), le chemin étant un chemin destiné à être parcouru par une entité (T) mobile dans l'environnement (E), l'entité (T) étant choisie parmi le groupe comportant : une personne, un groupe de personnes, un robot autonome, un robot piloté à distance, et un véhicule,
le procédé comportant des étapes de :
a) génération (100), dans une mémoire (18) d'un dispositif électronique (10) de calcul comportant un processeur (16), d'une première cartographie (200) de l'environnement (E), la première cartographie (200) étant divisée en un ensemble de premières cellules (205), chaque première cellule (205) délimitant une première portion de l'environnement (E), chaque première portion étant propre à être parcourue par l'entité (T),
b) génération (110) dans la mémoire (18), à partir de la première cartographie (200), d'une deuxième cartographie (215) de l'environnement (E), la deuxième cartographie (215) étant divisée en un ensemble de deuxièmes cellules (220), chaque deuxième cellule (220) délimitant une deuxième portion de l'environnement (E), chaque deuxième portion étant propre à être parcourue par l'entité (T), le nombre total de deuxièmes cellules (220) étant strictement inférieur au nombre total de premières cellules (205),
c) détermination (120), à partir de la deuxième cartographie (215), d'un premier graphe comportant un ensemble de premier nœuds et de premières arêtes, chaque premier nœud étant associé à un point d'une deuxième cellule (220), chaque première arête reliant deux premiers nœuds,
d) calcul (130), à partir du premier graphe, d'un chemin provisoire (230, 255), le chemin provisoire (230, 255) étant un chemin reliant un nœud d'une deuxième cellule (220) de départ dans laquelle le point de départ (D) est inclus à un nœud d'une deuxième cellule d'arrivée dans laquelle le point d'arrivée est inclus,
e) estimation d'une position de l'entité (T) et détermination (140) d'une région (260) de la première cartographie (200), la région (260) incluant la position estimée,
f) génération (150) dans la mémoire (18), à partir de la première cartographie (200), d'un deuxième graphe comportant un ensemble de deuxièmes nœuds et de deuxièmes arêtes, chaque deuxième nœud étant associé à un point d'une première cellule (205) contenue dans la région (260) déterminée, chaque deuxième arête reliant deux deuxièmes nœuds,
g) calcul (160), à partir du deuxième graphe, d'un chemin partiel (270, 275), le chemin partiel (270, 275) étant un plus court chemin entre la position estimée et un point d'intersection (265) entre le chemin provisoire (230, 255) et un périmètre de la région (260) déterminée,
h) déplacement (170), dans la première cartographie (200), de la position estimée de l'entité (T) le long du chemin partiel (270, 275) déterminé jusqu'à une nouvelle position, et
i) réitération des étapes e), f), g) et h) pour la nouvelle position estimée.

2. Procédé selon la revendication 1, dans lequel chaque première ou deuxième cellule (205, 220) est en forme de polygone convexe.

3. Procédé selon la revendication 1 ou 2, dans lequel il est défini une grille délimitant un ensemble de cases (210) de la première cartographie (200), les cases (210) formant un réseau bidimensionnel régulier, chaque première cellule (205) étant strictement incluse dans une unique case (210), au moins une ou chaque deuxième cellule (220) étant formée par la fusion de chaque première cellule (205) incluse dans une même case (210).

4. Procédé selon l'une quelconque des revendications 1 à 3, dans lequel l'une au moins des propriétés suivantes est satisfaite :
- le premier graphe comporte un nœud pour chaque face de chaque deuxième cellule (220), ou
- le deuxième graphe comporte un nœud pour chaque face de chaque première cellule (205) contenue dans la région (260) déterminée.

5. Procédé selon la revendication 4, dans lequel l'étape d) comporte :
- la détermination (235), pour chaque face de la deuxième cellule (220) de départ, d'une pluralité de chemins prospectifs, chaque chemin prospectif étant un plus court chemin reliant une face de la deuxième cellule (220) de départ à une face de la deuxième cellule (220) d'arrivée,
- la sélection (250) du chemin provisoire (230) parmi les chemins prospectifs.

6. Procédé selon la revendication 5, dans lequel l'étape d) comporte, en outre :
- pour chaque chemin prospectif, le calcul (240) d'une somme d'une longueur du chemin prospectif, d'une distance entre le point de départ (D) et la face correspondante de la deuxième cellule (220) de départ, et d'une distance entre le point d'arrivée et la face correspondante de la deuxième cellule (220) d'arrivée, et
- la comparaison (245) des sommes calculées,
le chemin prospectif correspondant à la somme la plus faible étant sélectionné comme étant le chemin provisoire (230).

7. Procédé selon l'une quelconque des revendications 1 à 6, dans lequel l'étape d) comporte la détermination, pour chaque deuxième cellule (220), du plus court chemin reliant au moins un point de la deuxième cellule (220) de départ à la deuxième cellule (220) considérée, et la mémorisation de chaque plus court chemin déterminé.

8. Procédé selon la revendication 7, prise avec la revendication 4, dans lequel l'étape d) comporte la détermination, pour chaque face de la deuxième cellule (220) de départ, et pour chaque deuxième cellule (220), du plus court chemin reliant la face considérée à la deuxième cellule (220) considérée, et la mémorisation de chaque plus court chemin déterminé.

9. Procédé selon l'une quelconque des revendications 1 à 8, dans lequel l'étape d) et/ou l'étape g) comporte, en outre, une étape de lissage du chemin provisoire (230) ou du chemin partiel (270).

10. Procédé selon l'une quelconque des revendications 1 à 9, dans lequel l'étape d) et/ou l'étape g) comporte l'application, sur le premier graphe ou le deuxième graphe, d'un algorithme de Dijkstra ou d'un algorithme A*.

11. Produit programme d'ordinateur (12) comportant des instructions logicielles configurées pour mettre en œuvre un procédé selon l'une quelconque des revendications 1 à 10 lorsque les instructions sont mises en œuvre par un processeur (16) du dispositif électronique de calcul (10).

12. Support d'informations (20) sur lequel sont mémorisée des instructions logicielles configurées pour mettre en œuvre un procédé selon l'une quelconque des revendications 1 à 10 lorsque les instructions sont mises en œuvre par un processeur (16) du dispositif électronique de calcul (10).

13. Dispositif électronique de calcul (10) comportant un processeur (16) configuré pour mettre en œuvre ur procédé selon l'une quelconque des revendications 1 à 10.

## Patentansprüche

1. Verfahren zur Berechnung eines Wegs zwischen einem Startpunkt (D) und einem Zielpunkt in einer Umgebung (E), wobei der Weg ein Weg ist, der von einer mobilen Entität (T) in der Umgebung (E) zurückgelegt werden soll, wobei die Entität (T) ausgewählt ist aus der Gruppe, umfassend: eine Person, eine Gruppe von Personen, einen autonomen Roboter, einen ferngesteuerten Roboter und ein Fahrzeug,
das Verfahren umfassend die folgenden Schritte:
a) Erzeugen (100), in einem Speicher (18) einer elektronischen Rechenvorrichtung (10), umfassend einen Prozessor (16),
einer ersten Kartografie (200) der Umgebung (E), wobei die erste Kartografie (200) in eine Anordnung von ersten Zellen (205) unterteilt ist, jede erste Zelle (205) einen ersten Abschnitt der Umgebung (E) begrenzt, wobei jeder erste Abschnitt geeignet ist, um von der Entität (T) durchlaufen zu werden,
b) Erzeugen (110), in dem Speicher (18), einer zweiten Kartografie (215) der Umgebung (E) anhand der ersten Kartografie (200), wobei die zweite Kartografie (215) in eine Anordnung von zweiten Zellen (220) unterteilt ist, jede zweite Zelle (220) einen zweiten Abschnitt der Umgebung (E) begrenzt, wobei jeder zweite Abschnitt geeignet ist, um von der Entität (T) durchlaufen zu werden, wobei die Gesamtanzahl an zweiten Zellen (220) strikt kleiner ist als die Gesamtanzahl an ersten Zellen (205),
c) Bestimmen (120), anhand der zweiten Kartografie (215), eines ersten Graphen, umfassend eine Anordnung von ersten Knoten und ersten Kanten, wobei jeder erste Knoten mit einem Punkt in einer zweiten Zelle (220) assoziiert ist, jede erste Kante zwei erste Knoten verbindet,
d) Berechnen (130), anhand des ersten Graphen, eines vorläufigen Wegs (230, 255), wobei der vorläufige Weg (230, 255) ein Weg ist,
der einen Knoten einer zweiten Startzelle (220), in der der Startpunkt (D) beinhaltet ist, mit einem Knoten einer zweiten Zielzelle verbindet, in der der Zielpunkt beinhaltet ist,
e) Schätzen einer Position der Entität (T) und Bestimmen (140) einer Region (260) der ersten Kartografie (200), wobei die Region (260) die geschätzte Position beinhaltet,
f) Erzeugen (150), in dem Speicher (18) anhand der ersten Kartografie (200), eines zweiten Graphen, umfassend eine Anordnung von zweiten Knoten und zweiten Kanten, wobei jeder zweite Knoten mit einem Punkt einer ersten Zelle (205) assoziiert ist, die in der bestimmten Region (260) enthalten ist, jede zweite Kante zwei zweite Knoten verbindet,
g) Berechnen (160), anhand des zweiten Graphen, eines Teilwegs (270, 275), wobei der Teilweg (270, 275) ein kürzester Weg zwischen der geschätzten Position und einem Schnittpunkt (265) zwischen dem vorläufigen Weg (230, 255) und einem Umfang der bestimmten Region (260) ist,
h) Verschieben (170), in der ersten Kartografie (200), der geschätzten Position der Entität (T) entlang des bestimmten Teilwegs (270, 275) bis zu einer neuen Position, und
i) Wiederholen der Schritte e), f), g) und h) für die neue geschätzte Position.

2. Verfahren nach Anspruch 1, wobei jede erste oder zweite Zelle (205, 220) die Form eines konvexen Polygons aufweist.

3. Verfahren nach Anspruch 1 oder 2, wobei ein Raster definiert ist, das eine Anordnung von Feldern (210) der ersten Kartografie (200) begrenzt, die Felder (210) ein regelmäßiges zweidimensionales Netz bilden, jede erste Zelle (205) strikt in einem einzelnen Feld (210) beinhaltet ist, wobei mindestens eine oder jede zweite Zelle (220) durch Verschmelzen jeder ersten Zelle (205) gebildet wird, die in einem einzelnen Feld (210) beinhaltet ist.

4. Verfahren nach einem der Ansprüche 1 bis 3, wobei mindestens eine der folgenden Eigenschaften erfüllt ist:
- der erste Graph umfasst einen Knoten für jede Seite jeder zweiten Zelle (220), oder
- der zweite Graph umfasst einen Knoten für jede Seite jeder ersten Zelle (205), die in der bestimmten Region (260) enthalten ist.

5. Verfahren nach
Anspruch 4, wobei Schritt d) Folgendes umfasst:
- Bestimmen (235), für jede Seite der zweiten Startzelle (220), einer Vielzahl von prospektiven Wegen, wobei jeder prospektive Weg ein kürzester Weg ist, der eine Seite der zweiten Startzelle (220) mit einer Seite der zweiten Zielzelle (220) verbindet,
- Auswählen (250) des vorläufigen Wegs (230) aus den prospektiven Wegen.

6. Verfahren nach Anspruch 5, wobei Schritt d) ferner Folgendes umfasst:
- für jeden prospektiven Weg, das Berechnen (240) einer Summe aus einer Länge des prospektiven Wegs, einer Entfernung zwischen dem Startpunkt (D) und der entsprechenden Seite der zweiten Startzelle (220) und einer Entfernung zwischen dem Endpunkt und der entsprechenden Seite der zweiten Zielzelle (220), und
- Vergleichen (245) der berechneten Summen,
wobei der prospektive Weg, der der niedrigsten Summe entspricht, als vorläufiger Weg ausgewählt (230) wird.

7. Verfahren nach einem der Ansprüche 1 bis 6, wobei der Schritt d) für jede zweite Zelle (220) die Bestimmung des kürzesten Wegs, der mindestens einen Punkt der zweiten Startzelle (220) mit der betrachteten zweiten Zelle (220) verbindet, und die Speicherung von jedem bestimmten kürzesten Weg umfasst.

8. Verfahren nach Anspruch 7, genommen zusammen mit Anspruch 4, wobei der Schritt d) für jede Seite der zweiten Startzelle (220) und für jede zweite Zelle (220) die Bestimmung des kürzesten Wegs, der die betrachtete Seite mit der betrachteten zweiten Zelle (220) verbindet, und die Speicherung von jedem bestimmten kürzesten Weg umfasst.

9. Verfahren nach einem der Ansprüche 1 bis 8, wobei Schritt d) und/oder Schritt g) ferner einen Schritt zum Glätten des vorläufigen Wegs (230) oder des Teilwegs (270) umfasst.

10. Verfahren nach einem der Ansprüche 1 bis 9, wobei Schritt d) und/oder Schritt g) die Anwendung eines Dijkstra-Algorithmus oder eines A*-Algorithmus auf den ersten Graphen oder den zweiten Graphen umfasst.

11. Computerprogrammprodukt (12), umfassend Softwareanweisungen, die konfiguriert sind, um ein Verfahren nach einem der Ansprüche 1 bis 10 durchzuführen, wenn die Anweisungen von einem Prozessor (16) der elektronischen Rechenvorrichtung (10) durchgeführt werden.

12. Informationsträger (20), auf dem Softwareanweisungen gespeichert sind, die konfiguriert sind, um ein Verfahren nach einem der Ansprüche 1 bis 10 durchzuführen, wenn die Anweisungen von einem Prozessor (16) der elektronischen Rechenvorrichtung (10) durchgeführt werden.

13. Elektronische Rechenvorrichtung (10), umfassend einen Prozessor (16), der konfiguriert ist, um ein Verfahren nach einem
der Ansprüche 1 bis 10 durchzuführen.

## Claims

1. A method for calculating a path between a departure point (D) and an arrival point in an environment (E), the path being a path intended to be navigated by an entity (T) moving in the environment (E), the entity (T) being selected from the group comprising: a person, a group of persons, an autonomous robot, a remotely controlled robot, and a vehicle,
the method including the steps of:
a) generating (100), in a memory (18) of an electronic calculating device (10) including a processor (16), a first map (200) of the environment (E), the first map (200) being divided into a set of first cells (205), each first cell (205) delimiting a first portion of the environment (E), each first portion being suitable for being navigated by the entity (T),
b) generating (110) in the memory (18), from the first map (200), a second map (215) of the environment (E), the second map (215) being divided into a set of second cells (220), each second cell (220) delimiting a second portion of the environment (E), each second portion being suitable for being navigated by the entity (T), the total number of second cells (220) being strictly less than the total number of first cells (205),
c) determining (120), from the second map (215), a first graph including a set of first nodes and first edges, each first node being related to a point of a second cell (220), each first edge connecting two first nodes,
d) calculating (130), from the first graph, a provisional path (230, 255), the provisional path (230, 255) being a path connecting a node of a second departure cell (220) in which the departure point (D) is included to a node of a second arrival cell in which the arrival point is included,
e) estimating a position of the entity (T) and determining (140) a region (260) of the first map (200), the region (260) including the estimated position,
f) generating (150) in the memory (18), from the first map (200), a second graph including a set of second nodes and second edges, each second node being related to a point of a first cell (205) contained in the determined region (260), each second edge connecting two second nodes,
g) calculating (160), from the second graph, a partial path (270, 275), the partial path (270, 275) being a shortest path between the estimated position and an intersection point (265) between the provisional path (230, 255) and a perimeter of the determined region (260),
h) moving (170), in the first map (200), the estimated position of the entity (T) along the determined partial path (270, 275) to a new position, and
i) repeating steps e), f), g) and h) for the new estimated position.

2. The method according to claim 1, wherein each first or second cell (205, 220) is in the shape of a convex polygon.

3. The method according to claim 1 or 2, wherein a grid is defined delimiting a set of cells (210) of the first map (200), the cells (210) forming a regular two-dimensional array, each first cell (205) being strictly included in a single cell (210), at least one or each second cell (220) being formed by merging each first cell (205) included in a single cell (210).

4. The method according to any one of claims 1 to 3, wherein at least one of the following properties is satisfied:
- the first graph includes a node for each face of each second cell (220), or
- the second graph includes a node for each face of each first cell (205) contained in the determined region (260).

5. The method according to claim 4, wherein step d) includes:
- determining (235), for each face of the second departure cell (220), a plurality of prospective paths, each prospective path being a shortest path connecting a face of the second departure cell (220) to a face of the second arrival cell (220),
- selecting (250) the provisional path (230) from the prospective paths.

6. The method according to claim 5, wherein step d) further includes:
- for each prospective path, calculating (240) a sum of a length of the prospective path, a distance between the departure point (D) and the corresponding face of the second departure cell (220), and a distance between the arrival point and the corresponding face of the second arrival cell (220), and
- comparing (245) the calculated sums,
the prospective path corresponding to the lowest sum being selected as the provisional path (230).

7. The method according to any one of claims 1 to 6, wherein step d) includes determining, for each second cell (220), the shortest path connecting at least one point of the second departure cell (220) to the second cell (220) under consideration and storing each determined shortest path.

8. The method according to claim 7, taken with claim 4, wherein step d) includes determining, for each face of the second departure cell (220), and for each second cell (220), the shortest path connecting the face under consideration to the second cell (220) under consideration, and storing each shortest path determined.

9. The method according to any one of claims 1 to 8, wherein step d) and/or step g) further includes a step of smoothing the provisional path (230) or the partial path (270).

10. The method according to any one of claims 1 to 9, wherein step d) and/or step g) includes applying, on the first graph or the second graph, a Dijkstra algorithm or an A* algorithm.

11. A computer program product (12) including software instructions configured to implement a method according to any one of claims 1 to 10 when the instructions are implemented by a processor (16) of the electronic calculating device (10).

12. A storage medium (20) wherein is stored software instructions configured to implement a method according to any one of claims 1 to 10 when the instructions are implemented by a processor (16) of the electronic calculating device (10).

13. An electronic calculating device (10) configured to implement a method according to any one of claims 1 to 10.
